# NOUVEAU FASCICULE DE BREVET EUROPEEN

(11) **EP 0 113 304 B2**
(45) Date de publication et mention de la décision concernant l'opposition: **18.11.1993**
(45) Mention de la délivrance du brevet: 15.04.1987
(21) Numéro de dépôt: 83440009.5
(22) Date de dépôt: 31.01.1983
(51) Int. Cl.: B23G 1/46

(54) **Mandrin de taraudage**
Gewindebohrfutter
Tap holder

(30) Priorité: 31.12.1982 FR 8222222
(43) Date de publication de la demande: 11.07.1984
(73) Titulaire: Pfalzgraf, Emile, 67330 Bouxwiller (FR)
(72) Inventeur: Pfalzgraf, Emile, 67330 Bouxwiller (FR)
(74) Mandataire: Nuss, Pierre

(56) Documents cités:
- FR-A- 1 193 303
- GB-A- 948 732
- GB-A- 961 825
- GB-A- 979 804
- GB-A- 1 022 896
- GB-A- 1 231 149
- US-A- 3 751 051

## Description

La présente invention concerne le domaine des accessoires pour machines-outils, en particulier pour perceuses, fraiseuses, tours, mécaniques ou à commande numérique, soit tous types de machines à broches réversibles, et a pour objet un mandrin de taraudage adaptable sur de telles machines, et tout spécialement destiné à des centres d'usinage.

Dans les mandrins de taraudage existant actuellement, la pièce mobile de réception du collet ou de l'adapteur avec le taraud est généralement guidée dans le corps du mandrin par coopération de forme de deux surfaces cylindriques, et l'entraînement de cette pièce mobile est réalisé au moyen d'une ou de plusieurs billes guidées dans une rainure longitudinale de ladite pièce et logées partiellement dans le corps du mandrin.

Cependant, dans ces mandrins connus il subsiste un frottement relativement important entre pièce mobile et corps de mandrin qui est incompatible avec un fonctionne- ment particulièrement fiable et une grande précision de taraudage, notamment pour les petites dimensions.

On connaît également par GB-A-1 022 896, un mandrin pour la fixation d'une queue cylindrique d'un outil fixé par une vis et qui permet un mouvement d'extension par guidage au moyen de billes logées dans des rainures longitudinales du corps fixe, disposées à intervalles réguliers sur la circonférence de ce dernier. Dans un tel mode de réalisation, on obtient un entraînement et un guidage de la pièce mobile, mais, cependant, il n'est pas possible d'assurer un maintien en équilibre en position de repos de la pièce mobile nécessaire pour l'exécution de taraudages de bonne qualité.

Il est également connu par un document Emugewerk-Richard Glimpel Fabrik für Präzisisions-werkzeuge vorm. Moschkau & Glimpel LAUF a.d. Pegnitz (Bayern), dénommé Emuge-Schnellwechselfutter Type KS-4, un mandrin de taraudage présentant une pièce mobile qui est toujours en contact de frottement sur le diamètre intérieur de l'alésage du corps du mandrin, le guidage longitudinal et l'entraînement de la pièce mobile par le corps étant réalisés au moyen d'une bille. Ainsi, il subsiste un frottement relativement important entre la pièce mobile et le corps du mandrin, de sorte que la précision de l'ensemble est relativement mauvaise.

En outre, les charges dues au couple d'entraînement sont uniquement transmises par la seule bille de guidage et d'entraînement, de sorte que les charges ponctuelles résultantes sont très importantes et qu'il en découle une usure rapide du corps et de la pièce mobile.

De plus, la butée pour l'extension vers l'avant est réalisée par une rainure borgne 21 coopérant avec la bille de guidage et d'entraînement, cette rainure étant relativement difficile à usiner.

On connaît également par un document BILZ Gewindeschneid-Schnellwechselfutter Type WFLK un mandrin de taraudage comportant une bague servant à retenir une bille d'entraînement. Une telle bague n'est, cependant, pas destinée à retenir également des billes de guidage dont le but principal est de réduire fortement le frottement en réalisant quasiment une cage de roulement.

De plus, ce mandrin comporte un dispositif de serrage de la partie mobile dans le corps avec interposition de ressorts de compression, cette vis ne permettant toutefois pas de réaliser le moindre réglage de la compression desdits ressorts et encore moins de réaliser un tarage précis de ces derniers.

La présente invention a pour but de pallier ces inconvénients.

Elle a pour objet un mandrin de taraudage constitué par un corps de mandrin et par une pièce mobile de réception d'un collet ou d'un adapteur guidée dans le corps et entraînée en rotation par ce dernier, au moyen de billes ou aiguilles disposées en lignes longitudinales ou sur la circonférence dans des trous ou des rainures espacés suivant des angles réguliers sur la partie avant du corps, les billes ou aiguilles étant maintenues dans lesdits trous ou rainures et coopérant avec des gorges longitudinales du diamètre extérieur de la pièce mobile, la pièce mobile étant sollicitée à sa partie postérieure ou queue par un ressort d'extension et par un ressort de compression fixés au moyen d'une vis pénétrant dans ladite partie postérieure et la pièce mobile, avec ses ressorts de compression et d'extension, étant montée et tenue dans le corps au moyen d'une bague serrée par des vis, un couvercle entourant la partie avant du corps étant solidarisé avec la pièce mobile, caractérisé en ce que le contact entre le corps et la pièce mobile est uniquement réalisé par les billes ou aiguilles, de sorte qu'il n'existe aucun frottement entre le corps et la pièce mobile, en ce que, à sa partie postérieure, la pièce mobile est pourvue, en outre, d'une rondelle serrée par la vis et formant butée pour l'extension vers l'avant de la pièce mobile et en ce que le corps est muni, d'une part, d'une ou de plusieurs rangées de billes disposées à intervalles réguliers sur la circonférence avec décalage entre elles pour assurer le guidage de la pièce mobile, et, d'autre part, de billes ou de rangées de billes disposées à intervalles réguliers avec décalage par rapport aux premières, et coopérant avec des gorges de la pièce mobile pour réaliser l'entraînement de cette dernière, les billes étant maintenues dans le corps au moyen d'une bague fixe solidaire dudit corps.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels :
les figures 5 et 6 sont des vues en coupe, respectivement longitudinale et transversale, d'un mandrin conforme à l'invention ;
la figure 6A est une vue partielle en plan montrant le positionnement des billes suivant les figures 5 et 6, et
la figure 9 montre également en coupes longitudinale et transversale une autre variante de réalisation de l'invention.

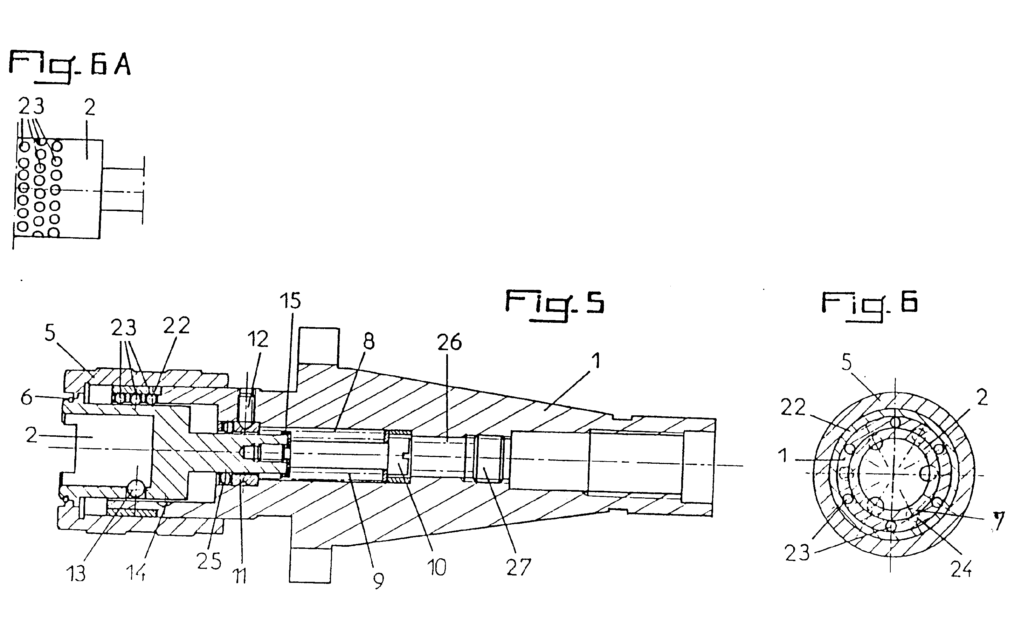

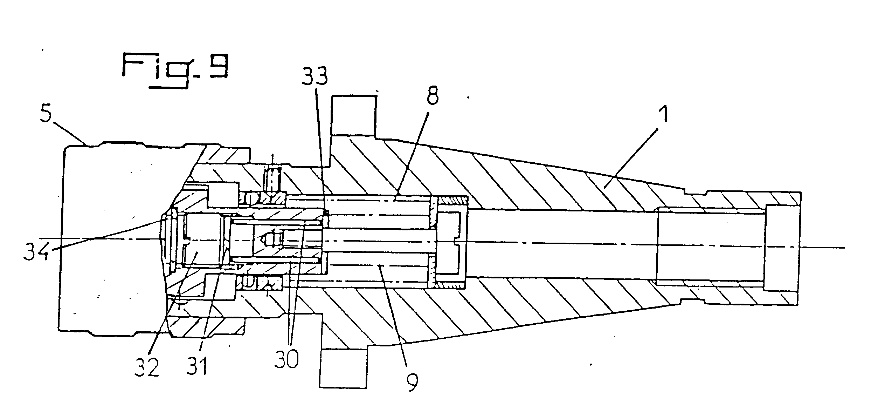

Conformément à l'invention, et comme le montre plus particulièrement, à titre d'exemple, la figure 5 des dessins annexés, le mandrin de taraudage, qui est constitué par un corps de mandrin 1 et par une pièce mobile 2 de réception d'un collet ou d'un adapteur guidée dans le corps 1 et entraînée en rotation par ce dernier, au moyen de billes 24 et 23 ou aiguilles disposées en lignes longitudinales ou sur la circonférence dans des trous ou des rainures espacés suivant des angles réguliers sur la partie avant du corps 1, les billes 24 et 23 ou aiguilles étant maintenues dans lesdits trous ou rainures et coopérant avec des gorges longitudinales 7 du diamètre extérieur de la pièce mobile 2, la pièce mobile 2 étant sollicitée à sa partie postérieure ou queue par un ressort d'extension 8 et par un ressort de compression 9 fixés au moyen d'une vis 10 pénétrant dans ladite partie postérieure et la pièce mobile 2, avec ses ressorts de compression 9 et d'extension 8, étant montée et tenue dans le corps 1 au moyen d'une bague 11 serrée par des vis 12, par exemple par trois vis pointeau, un couvercle 5, retenu par un circlips 6 ou analogue, entourant la partie avant du corps 1 et étant solidarisé avec la pièce mobile 2. Le contact entre le corps 1 et la pièce mobile 2 est uniquement réalisé par les billes 24 et 23, de sorte qu'il n'existe aucun frottement entre le corps 1 et la pièce mobile 2. A sa partie postérieure, la pièce mobile 2 est pourvue, en outre, d'une rondelle 15 serrée par la vis 10 et formant butée pour l'extension vers l'avant de la pièce mobile 2 et le corps 1 est muni, d'une part, d'une ou de plusieurs rangées de billes 23 disposées à intervalles réguliers sur la circonférence avec décalage entre elles (figures 6 et 6a) pour assurer le guidage de la pièce mobile 2, et, d'autre part, de billes ou de rangées de billes 24 disposées à intervalles réguliers avec décalage par rapport aux premières, et coopérant avec des gorges 7 de la pièce mobile 2 pour réaliser l'entraînement de cette dernière, les billes 23 et 24 étant maintenues dans le corps 1 au moyen d'une bague fixe 22 (figures 5 et 6) solidaire dudit corps 1.

La fixation d'un collet ou d'un adapteur s'effectue de manière connue par l'intermédiaire de trois billes 13 se rétractant, en position de compression de la pièce 2, dans une gorge 14 du corps 1.

A sa partie postérieure, la pièce 2 est pourvue, en outre, d'une rondelle 15 serrée par la vis 10 et formar butée pour l'extension vers l'avant de la pièce 2.

Comme le montrent les figures 5 et 6 les fonctions de guidage et d'entraînement sont séparées. En effet, le corps 1 est muni, d'une part, d'une ou de plusieurs rangées de billes 23 disposées à intervalles réguliers sur la circonférence avec décalage entre elles pour assurer le guidage de la pièce 2 (figure 6A), et d'autre part, de billes ou de rangées de billes 24 disposées à intervalles réguliers avec décalage par rapport aux premières, et coopérant avec des gorges de la pièce 2 pour réaliser l'entraînement de cette dernière, les billes 23 et 24 étant maintenues dans le corps 1 au moyen d'une bague fixe 22 solidaire dudit corps 1.

Selon une autre caractéristique preferée de l'invention, un guidage supplémentaire de la pièce 2 dans le corps 1 est réalisé par la prévision de billes 25 dans la bague 11 de montage de la partie postérieure ou queue de la pièce mobile 2, s'appliquant sur ladite partie postérieure

Grâce à ce mode de réalisation, la longueur du guidage entre corps 1 et pièce 2 sera maintenue constante quelle que soit la position d'extension ou de compression de la pièce 2.

En outre, le durcissement de la compression peut être obtenu au moyen d'un ressort supplémentaire 26 agissant sur la vis 10 de fixation des ressorts 8 et 9, et dont le tarage est règlable au moyen d'une vis 27. Un tel durcissement de la compression est prévu pour régler la puissance d'attaque des tarauds en fonction des tarauds utilisés et du métal à usiner.

La figure 9 montre une variante de réalisation du mandrin, dans laquelle la partie postérieure de la pièce 2 est pourvue d'un dispositif de règlage de la compression du ressort de compression 9 constitué par des aiguilles 30 coulissant dans des trous correspondants de la partie postérieure de la pièce 2, par une rondelle 31 d'actionnement des aiguilles 30 au moyen d'une vis 32 serrée dans la pièce 2 par l'avant, et par une rondelle 33 de transmission de l'effort appliqué sur les aiguilles 30 au ressort 9, le déplacement de la vis' 32 dans le sens de son dessarrage étant limité par un circlips 34, ou analogue.

Ce dispositif permet l'obtention d'un point dur à l'attaque du taraud, et le tarage du ressort 9 peut être réalisé par l'avant du mandrin en fonction du diamètre des tarauds utilisés.

Grâce à l'invention, il est possible de réaliser des mandrins de taraudage destinés notamment à des machines pouvant programmer la descente et pourvues d'un renversement de marche sur leur broche, et présentant un dispositif d'entraînement et de guidage à frottement très faible permettant ainsi l'exécution de taraudages parfaits.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection des revendications.

## Revendications

1. Mandrin de taraudage constitué par un corps de mandrin (1) et par une pièce mobile (2) de réception d'un collet ou d'un adapteur guidée dans le corps (1) et entraînée en rotation par ce dernier, au moyen de billes (24, 23) ou aiguilles disposées en lignes longitudinales ou sur la circonférence dans des trous ou des rainures espacés suivant des angles réguliers sur la partie avant du corps (1), les billes (24, 23) ou aiguilles étant maintenues dans lesdits trous ou rainures et coopérant avec des gorges longitudinales (7) du diamètre extérieur de la pièce mobile (2), la pièce mobile (2) étant sollicitée à sa partie postérieure ou queue par un ressort d'extension (8) et par un ressort de compression (9) fixés au moyen d'une vis (10) pénétrant dans ladite partie postérieure et la pièce mobile (2), avec ses ressorts de compression (9) et d'extension (8), étant montée et tenue dans le corps (1) au moyen d'une bague (11) serrée par des vis (12), un couvercle (5) entourant la partie avant du corps (1) étant solidarisé avec la pièce mobile (2), caractérisé en ce que le contact entre le corps (1) et la pièce mobile (2) est uniquement réalisé par les billes (24, 23) ou aiguilles, de sorte qu'il n'existe aucun frottement entre le corps (1) et la pièce mobile (2), en ce que, à sa partie postérieure, la pièce mobile (2) est pourvue, en outre, d'une rondelle (15) serrée par la vis (10) et formant butée pour l'extension vers l'avant de la pièce mobile (2) et en ce que le corps (1) est muni, d'une part, d'une ou de plusieurs rangées de billes (23) disposées à intervalles réguliers sur la circonférence avec décalage entre elles pour assurer le guidage de la pièce mobile (2), et, d'autre part, de billes ou de rangées de billes (24) disposées à intervalles réguliers avec décalage par rapport aux premières, et coopérant avec des gorges (7) de la pièce mobile (2) pour réaliser l'entraînement de cette dernière, les billes (23 et 24) étant maintenues dans le corps (1) au moyen d'une bague fixe (22) solidaire dudit corps (1).

2. Mandrin, suivant la revendication 1, caractérisé en ce qu'un guidage supplémentaire de la pièce mobile (2) dans le corps (1) est réalisé par la prévision de billes (25) dans la bague (11) de montage de la partie postérieure ou queue de la pièce mobile (2), s'appliquant sur ladite partie postérieure.

3. Mandrin, suivant la revendication 1, caractérisé en ce que le durcissement de la compression peut être obtenu au moyen d'un ressort supplémentaire (26) agissant sur la vis (10) de fixation des ressorts (8 et 9), et dont le tarage est réglable au moyen d'une vis (27).

4. Mandrin, suivant la revendication 1, caractérisé en ce que la queue de la pièce mobile (2) est guidée par des billes (25) de la bague (11), de sorte que la longueur de guidage reste constante en toutes positions de la pièce mobile (2).

5. Mandrin, suivant l'une quelconque des revendications 1 et 3, caractérisé en ce que la partie postérieure de la pièce mobile (2) est pourvue d'un dispositif de réglage de la compression du ressort de compression (9) constitué par des aiguilles (30) coulissant dans des trous correspondants de la partie postérieure de la pièce mobile (2), par une rondelle (31) d'actionnement des aiguilles (30) au moyen d'une vis (32) serrée dans la pièce mobile (2) par l'avant, et par une rondelle (33) de transmission de l'effort appliqué sur les aiguilles (30) au ressort (9), le déplacement de la vis (32) dans le sens de son desserrage étant limité par un circlips (34), ou analogue.

## Patentansprüche

1. Werkzeugspanner zum Gewindeschneiden, bestehend aus einem Werkzeugspannkörper (1) und aus einem beweglichen Stück (2) zur Aufnahme eines Halslagers oder oder Umrüstteils, das in dem Körper (1) geführt und von dem letzteren mit Hilfe von in Längsreihen oder am Umfang in gleichmäßigen Winkeladständen auf dem Vorderteil des Körpers (1) verteilten Löchern oder Nuten angeordneten Kugeln (24, 23) oder Stiften in Rotation versetzt wird, wobei die Kugeln (24, 23) oder Stifte in den besagten Löchern oder Nuten festgehalten werden und mit Längsrillen (7) am Außendurchmesser des beweglichen Stücks (2) zusammenwirken, wobei das bewegliche Stück (2) an seinem rückwärtigen Teil oder Endstück durch eine Dehnfeder (8) und durch eine Druckfeder (9) beansprucht wird, die mittels einer in das besagte rückwärtige Teil eintretenden Schraube (10) befestigt sind, und das bewegliche Stück (2) mit seiner Druck- (9) und Dehnfeder (8) in dem Körper (1) mittels eines durch Schrauben (12) festgesetzten Ringes (11) befestigt und gehalten wird und ein Deckel (5), der das Vorderteil des Körpers (1) umgibt, mit dem beweglichen Stück (2) verbunden ist,
dadurch **gekennzeichnet,**
daß der Kontakt zwischen dem Körper (1) und dem beweglichen Stück (2) einzig durch die Kugeln (24, 23) oder Stifte hergestellt ist, sodaß zwischen dem Körper (1) und dem beweglichen Stück (2) keinerlei Reibung besteht, und daß das bewegliche Stück (2) an seinem rückwärtigen Teil außerdem mit einer mittels Schraube (10) festgesetzten Unterlegscheibe (15) versehen ist und für die Streckung des beweglichen Stückes (2) nach vorne einen Anschlag bildet, und daß der Körper (1) einerseits mit einer oder mehreren Reihen von Kugeln (23) versehen ist, die in regelmäßigen Abständen am Umfang zueinander versetzt angeordnet sind, um die Führung des beweglichen Teils (2) zu gewährleisten, und andererseits mit Kugeln oder Kugelreihen (24) versehen ist, die in regelmäßigen Abständen zu den ersten versetzt angeordnet sind und mit LängsrilIen (7) des beweglichen Stücks (2) zusammenwirken, um die Mitnahme von letzterem zu gewährleisten, wobei die Kugeln (23 und 24) im Körper (1) mittels eines mit besagtem Körper (1) fest verbundenen festen Ringes (22) gehalten werden.

2. Werkzeugspanner nach Anspruch 1,
dadurch **gekennzeichnet,**
daß eine zusätzliche Führung des beweglichen Stücke (2) in dem Körper (1) durch Vorsehen von Kugeln (25) in dem Ring (11) zur Montage des rückwärtigen Teils oder Endstücks des beweglichen Stücks (2), das sich an das besagte rückwärtige Teil anpaßt, bewerkstelligt wird.

3. Werkzeugspanner nach Anspruch 1,
dadurch **gekennzeichnet,**
daß die Druckhärte mit Hilfe einer auf die Schraube (10) zur Befestigung der Federn (8 und 9) enwirkenden, zusätzlichen Feder (26), und deren Abgleich mittels einer Schraube (27) einstellbar ist, erreicht werden kann.

4. Werkzeugspanner nach Anspruch 1,
dadurch **gekennzeichnet,**
daß das Endstück des beweglichen Stücks (2) durch Kugeln (25) des Ringes (11) derart geführt wird, daß die Führungslänge bei allen Positionen des beweglichen Stücks (2) konstant bleibt.

5. Werkzeugspanner nach einem der Ansprüche 1 und 3
dadurch **gekennzeichnet,**
daß das rückwärtige Teil des beweglichen Stücks (2) mit einer Einstellvorrichtung für den Druck der Druckfeder (9) versehen ist, die aus in entsprechenden Löchern des rückwärtigen Teils des beweglichen Stücks (2) gleitenden Stiften (30), aus einer Unterlegscheibe (31) zur Betätigung der Stifte (30) mittels einer in dem beweglichen Stück (2) von vorne her festgesetzten Schraube (32) und aus einer Unterlagscheibe (33) zur übertragung der auf die Stifte (30) an der Feder (9) einwirkenden Kraft, wobei die Verschiebung der Schraube (32) in Aufschraubrichtung durch einen Sicherungsring (34) oder ähnliches begrenzt wird, besteht.

## Claims

1. A tap holder consisting of a holder body (1) and of a movable member (2) to receive a flange or an adapter, which movable member is guided in the body (1) and driven in rotation by the latter, by means of balls (24, 23) or needles disposed in longitudinal lines or over the circumference in holes or grooves spaced at regular angles over the front portion of the body (1), the balls (24, 23) or needles being held in said holes or grooves and co-operating with longitudinal grooves (7) in the external diameter of the movable member (2), the movable member (2) being urged at its rear portion or tail by an extension spring (8) and by a compression spring (9) fixed by means of a screw (10) penetrating into said rear portion of the movable member (2), with its compression spring (9) and extension spring (8) being mounted and held in the body (1) by means of a ring (11) tightened by screws (12), a cover (5) surrounding the front portion of the body (1) being rigidly connected to the movable member (2), characterised in that the contact between the body (1) and the movable member (2) is only effected by the balls (24, 23) or needles, in such a manner that there is no friction between the body (1) and the movable member (2), in that the member (2) is further provided, at its rear portion, with a washer (15) tightened by the screw (10) and forming a stop for the forward extension of the movable member (2) and in that the body (1) is equipped, on the one hand, with one or more rows of balls (23) disposed at regular intervals over the circumference with staggering between them to ensure the guiding of the movable member (2) and, on the other hand, with balls or rows of balls (24) disposed at regular intervals staggered in relation to the first ones, and co-operating with grooves (7) in the movable member (2) to effect the drive of the latter, the balls (23 and 24) being held in the body (1) by means of a fixed ring (22) rigidly connected to said body (1).

2. A holder according to claim 1, characterised in that a supplementary guiding of the movable member (2) in the body (1) is effected by the provision of balls (25) in the ring (11) for mounting the rear portion or tail of the movable member (2) bearing against said rear portion.

3. A holder according to claim 1, characterised in that the hardening of the compression can be obtained by means of a supplementary spring (26) acting on the screw (10) for fixing the springs (8) and (9), and the calibration of which can be adjusted by means of a screw (27).

4. A holder according to claim 1, characterised in that the tail of the movable member (2) is guided by balls (25) of the ring (11), in such a manner that the length of guiding remains constant in all positions of the movable member (2).

5. A holder according to any one of claims 1 and 3, characterised in that the rear portion of the movable member (2) is provided with a device for adjusting the compression of the compression spring (9) consisting of needles (30) sliding in corresponding holes in the rear portion of the movable member (2), of a washer (31) for actuating the needles (30) by means of a screw (32) screwed into the movable member (2) from the front, and of a washer (33) for transmitting the force applied to the needles (30) at the spring (9), the displacement of the screw (32) in the unscrewing direction being limited by a circlip (34) or the like.
